(19) Europäisches Patentamt
European Patent Office
Office européen des brevets

(11) **EP 0 534 260 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int. Cl.$^6$: **B29C 59/00**, B29C 33/68, B32B 5/14

(21) Anmeldenummer: **92115667.5**

(22) Anmeldetag: **14.09.1992**

(54) **Verfahren zur Herstellung von entspiegelten Oberflächen**

Method for obtaining anti-reflective surfaces

Procédé pour la réalisation de surfaces anti-réfléchissantes

(84) Benannte Vertragsstaaten:
**DE FR GB IT LU NL**

(30) Priorität: **21.09.1991 DE 4131517**

(43) Veröffentlichungstag der Anmeldung:
**31.03.1993 Patentblatt 1993/13**

(73) Patentinhaber: **HOECHST AKTIENGESELLSCHAFT 65926 Frankfurt am Main (DE)**

(72) Erfinder:
• **Beer, Ekkehard W-6208 Bad Schwalbach (DE)**
• **Dallmann, Hermann, Dr. W-6200 Wiesbaden (DE)**
• **Hagens, Hajo, Dr. W-6200 Wiesbaden (DE)**

(56) Entgegenhaltungen:
**EP-A- 0 463 333**      **EP-A- 0 483 676**
**DE-A- 3 831 503**      **US-A- 3 697 277**

## Beschreibung

Die Erfindung betrifft ein Verfahren zur Herstellung von entspiegelten Oberflächen, bei dem eine oberflächenstrukturierte Folie verwendet wird.

Um bestimmte optische Effekte zu erreichen, bei denen vor allem Lichtspiegelungen vermieden werden sollen, die besonders an Gegenständen aus Kunststoff, Metall, Glas oder auch hochwertigem Hochglanzpapier oft auftreten, müssen die Oberflächen derartiger Gegenstände ein bestimmtes Rauhigkeitsprofil besitzen, an dem das auftreffende Licht nicht reflektiert, sondern gebrochen wird.

Üblicherweise werden geeignete Rauhigkeiten erreicht, indem der Matrix der Gegenstände, insbesondere bei Kunststoff, Inertpartikel mit einer geeigneten Korngröße zugesetzt oder indem die betreffende Oberfläche mechanisch durch Bürstgen oder Schleifaggregate bearbeitet wird, bei Metallen gibt es auch die anodische Aufrauhung. Wie man sich leicht vorstellen kann, ist der Zusatz von Inertstoffen nicht immer erwünscht, weil dadurch die Gesamtoptik des Gegenstandes und teilweise die mechanischen Eigenschaften beeinträchtigt werden, sind doch die Inertpartikel nicht nur an der Oberfläche vorhanden, wo sie ihre Wirkung entfalten sollen, sondern vielmehr über die Gesamtmasse des Gegenstandes verteilt. Die mechanische Bearbeitung der Oberfläche ist auch nicht immer und in jedem Fall die optimale Lösung, weil dabei stets Abrieb in größeren Mengen anfällt, der im Betrieb zu Störungen führt und sich meist nicht vollständig entfernen läßt. Es wurde bereits vorgeschlagen, (DE-A 38 31 503, US-A 3,697,277) spiegelnde Oberflächen, wie Glasscheiben oder Photographen mit einer matten Folie oder einer Folie mit reliefartiger Oberfläche abzudecken. Diese Maßnahmen führten aber auch nicht zu zufriedenstellenden Ergebnissen.

Es bestand also die Aufgabe, eine Methode zu entwickeln, die die oben beschriebenen Nachteile ausschließt und einfach und kostengünstig durchführbar ist, mit dem Ziel, Lichtreflexionen an der glatten Oberfläche von Gegenständen zu vermeiden.

Gelöst wird die Aufgabe durch ein Verfahren zur Herstellung von entspiegelten Oberflächen von Formkörpern, wobei eine wenigstens einschichtige Folie aus einem thermoplastischen Material verwendet wird, die zumindest auf einer ihrer beiden Oberflächen regelmäßige Strukturen aufweist, die sich 0,01 bis 15 $\mu$m, vorzugsweise 0,1 bis 5,0 $\mu$m über die tiefsten Bereiche der jeweiligen Oberfläche erheben, wobei die Strukturen durch statistisch verteilte, spitzförmige Einzelerhebungen, gegebenenfalls durch in die Folie eingearbeitete Inertpartikel bedingt, überlagert sind, und aus in Längs- und Querrichtung angeordneten, vorzugsweise miteinander verbundenen Elementarzellen weitgehend gleichmäßiger Konfiguration bestehen, deren mittlerer Durchmesser

$$d_m = \frac{d_{max} + d_{min}}{2}$$

mit

$d_{max}$ = maximaler Durchmesser der Elementarzellen an der breitesten Stelle und

$d_{min}$ minimaler Durchmesser der Elementarzellen an der schmalsten Stelle

im Bereich von 10 bis 800 $\mu$m, vorzugsweise im Bereich von 20 bis 400 $\mu$m liegt und deren Verhältnis von minimalem zu maximalem Durchmesser im Bereich von

$$0,1 \leq \frac{d_{min}}{d_{max}} \leq 1$$

liegt, wobei die Folie auf den zu entspiegelnden Formkörper aufgebracht wird oder die Oberflächenstrukturen der Folie mit Hilfe einer Dekor- und Adhäsionsschicht spiegelbildlich auf die Oberfläche des zu entspiegelnden Formkörpers übertragen werden.

Die Grundstruktur kann als viele miteinander verbundene Einzelstrukturen beschrieben werden, wobei die Einzelstrukturen eine weitgehend gleichförmige Konfiguration besitzen. Unter dem Begriff einer "weitgehend gleichförmigen Konfiguration" soll im Rahmen der vorliegenden Erfindung eine Strukturierung verstanden werden, bei der die einzelnen Strukturelemente nicht unregelmäßig und in rein zufälliger Formgebung nebeneinander angeordnet sind, sondern sie sollen sich in ihren wesentlichen geometrischen Abmessungen, der Form und Lage in der Ebene, der Größe und der Erhebung über die Folienebene hinaus soweit ähnlich sein, daß bei einem unvoreingenommenen Betrachter der Eindruck einer Regelmäßigkeit entsteht, hervorgerufen durch immer wiederkehrende und als gleich identifizierte Elementarzellen. Der mittlere Durchmesser $d_m$ der besagten Elementarzellen soll erfindungsgemäß im Bereich von 10 bis 800 $\mu$m liegen, vorzugsweise von 20 bis 400 $\mu$m, wobei der mittlere Durchmesser bestimmt wird gemäß:

$$d_m = \frac{d_{max} + d_{min}}{2}$$

mit

$d_{max}$ = Durchmesser der Elementarzelle an der breitesten Stelle und

$d_{min}$ = Durchmesser der Elementarzelle an der schmalsten Stelle.

Das Längen- zu Breitenverhältnis der Elementarzellen liegt hierbei im Bereich von

$$0,1 \leq \frac{d_{min}}{d_{max}} \leq 1.$$

Die erfindungsgemäße Grundstruktur ist so ausgebildet, daß die Verformungen der Oberfläche sich etwa 0,01 bis 15,0 $\mu$m über die tiefsten Bereiche der Oberfläche erheben, vorzugsweise 0,1 bis 5,0 $\mu$m.

Folien dieser Art sind bereits in der DE-A-40 15 658 sowie in der DE-A-40 34 869 vorgeschlagen worden, auf die an dieser Stelle ausdrücklich Bezug genommen wird. Die vorliegende Erfindung betrifft nun die Anwendung einer solchen Folie in einem Verfahren zur Herstellung von entspiegelten Oberflächen. Diese Anwendung kann erfindungsgemäß auf mehrere Arten erfolgen. In der einfachsten Ausführungsform der Erfindung wird die Folie als Deckschicht auf die Oberfläche, die entspiegelt werden soll, unter Verwendung von Haftvermittlern nach einem der üblichen Verfahren, die dem Stand der Technik entsprechen, aufgebracht. Alternativ hierzu kann die Folie bereits im Herstellungsprozeß mit einer haftvermittelnden Schicht ausgerüstet sein, die beispielsweise mittels In-line-Beschichtung oder Coextrusion aufgebracht wurde; in diesem Fall kann die Folie unter Einwirkung von Wärme und Druck unmittelbar auf die zu entspiegelnde Oberfläche aufgebracht werden. Wenn bei der Folie nicht beide Seiten die charakteristische Oberflächenstrukturierung aufweisen, dann ist die Folie zweckmäßigerweise so aufzubringen, daß die Seite mit der Strukturierung nach außen zeigt und die glatte Seite, die keine Oberflächenstrukturierung zeigt, der Oberfläche des Gegenstandes zugewandt ist, die entspiegelt werden soll.

In einer weiteren Ausführungsform der Erfindung wird auf die strukturierte Oberfläche der Folie eine Dekorschicht aufgebracht, und diese Dekorschicht wird dann unter Mitwirkung einer weiteren durch Wärme und/oder Druck aktivierbaren Adhäsionsschicht vollflächig oder partiell auf die zu entspiegelnde Oberfläche eines Gegenstandes übertragen. Die nach der Übertragung freiliegende Oberfläche der Dekorschicht zeigt eine Oberflächenstrukturierung, die sich als exaktes Negativbild der Strukturierung der Folie selbst darstellt. Auf diese Weise können z. B. entspiegelte Schriftzüge oder Abbildungen auf Unterlagen übertragen werden, und es läßt sich ein optisches Erscheinungsbild hervorrufen, das das ästhetische Empfinden des Betrachters in besonders angenehmer Weise anspricht.

In einer dritten Ausführungsform des erfindungsgemäßen Verfahrens kann z. B. bei Gegenständen aus Kunststoffmassen wie glasfaserverstärkten Kunststoffplatten oder Melaminharzplatten schon während der Plattenherstellung eine oder beide Oberflächen entspiegelt werden, indem die Folie mit der Oberflächenstrukturierung bei dem Verpressen der Platten als Trennfolie eingesetzt wird, die nach dem Verpressen und Aushärten abgezogen wird und eine im Vergleich zu der Folie spiegelbildliche Oberflächenstrukturierung auf der Platte ergibt.

Die Gegenstände selbst, deren Oberfläche erfindungsgemäß entspiegelt wird, können aus den verschiedensten Materialien wie Kunststoff, Glas, Metall, Papier, Pappe bestehen, es kann sich aber auch um lackiertes Holz oder um hochglanzpolierte keramische Materialien handeln.

Die Folie kann aus verschiedenen Polymeren aufgebaut sein wie z.B. natürliche und synthetische Polymere wie Cellulose, Celluloseester, Polyvinylchlorid, Polystyrol, Styrolcopolymere, Polycarbonat, Polymere und Copolymere von Olefinen wie Ethylen, Propylen, Butylen, Methylpenten usw., Polysulfon, aliphatische und aromatische Polyester, Polyimide, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid usw. (vgl. Ullmans Enzyklopädie der technischen Chemie, Verlag Chemie, Weinheim, 4. neubearbeitete und erweiterte Auflage (1976), Seite 673 ff; Encyclopedia of Polymer Science and Eng., Vol. 7, John Wiley & Sons (1973), Seite 73 ff.).

Das erfindungsgemäß beanspruchte Verfahren ermöglicht im Gegensatz zu den dem Stand der Technik entsprechenden Verfahren, bedingt durch die größeren Variationsmöglichkeiten bezüglich der Oberflächenstrukturierung der eingesetzten Folie, die Einstellung der optischen Eigenschaften (Trübung, Glanz, Reflexionsvermögen u.a.) der hiermit ausgerüsteten Formkörper in weiten Grenzen.

Im Rahmen der nachfolgenden Ausführungsbeispiele werden Folien auf Polyesterbasis verwendet, die mit den oben beschriebenen Oberflächenstrukturen ausgerüstet sind. Hierbei stellt die Verwendung von Folien auf Polyesterbasis keine Einschränkung der Erfindung dar.

Die in den Beispielen angegebenen Parameter sind folgendermaßen bestimmt worden:

a) Bestimmung der Oberflächenstrukturen der Folien, d.h. Geometrie der miteinander verbundenen Elementarzellen

Der breiteste und der schmalste Durchmesser ($d_{max}$; $d_{min}$) einer Elementarzelle wird mittels Differential-Interferenz-Kontrast-Mikroskop-Aufnahmen bestimmt. Der mittlere Abstand zwischen der höchsten und der tiefsten Stelle einer Elementarzelle wurde mittels eines Hommel-Gerätes T20 DC bestimmt, wobei 50 nebeneinanderliegende Einzelschriebe der strukturierten Oberfläche der Folie aufgenommen wurden.

b) Glanzmessung

Die Glanzmessung wird entsprechend DIN 67 530 bei einem Winkel von 20° und 60° auf einer Schwarzglasplatte (Brechungsindex n = 1,567) durchgeführt.

c) Oberflächentrübung

Die Oberflächentrübung ergibt sich als Differenz aus Gesamt- und Volumentrübung, wobei die Gesamttrübung in Anlehnung an ASTM 1003-52 und die Volumentrübung nach vollständiger Einbettung der Folie in Immersionsöl für Mikroskopie [Brechungsindex ($n_D^{20°}$) etwa 1,516] der Fa. Merck, Darmstadt ermittelt wurden.

Als zu entspiegelnder Formkörper wurde beispielhaft ein flächiges Gebilde mit einer Dicke von 0,35 mm, das aus einem hochreinen, völlig additivfreien Polyester hergestellt wurde, verwendet.

Der Glanz dieses Formkörpers betrug in alle Richtungen einheitlich
bei einem 60°-Meßwinkel 184 und
bei einem 85°-Meßwinkel 118.

Beispiel 1

Eine 36 µm dicke, in enger Anlehnung an Ausführungsbeispiel 1 in der DE-A-40 34 869 hergestellte, additivfreie Polyesterfolie, die auf einer ihrer Oberflächen Strukturen in Form von untereinander verbundenen Elementarzellen mit $d_{max}$ ungefähr 350 µm und $d_{min}$ ungefähr 120 µm und einem maximalen Abstand zwischen tiefsten und höchsten Bereichen dieser Zellen von 4 µm aufweist, wurde unter Verwendung eines Haftvermittlers auf Polyesterbasis auf den Formkörper auflaminiert. Der Glanz dieses Formkörpers betrug nach Auflaminierung dieser Folie in der ersten Richtung bei einem 60°-Meßwinkel 79 und bei einem 85°-Meßwinkel 33, wobei die erste Richtung der Richtung der Längsorientierung der Folie entspricht, und in der dazu senkrechten Richtung bei einem 60°-Meßwinkel 140 und bei einem 85°-Meßwinkel 87.

Beispiel 2

Eine 9 µm dicke, in enger Anlehnung an Ausführungsbeispiel 1 in der DE-A-40 34 869 hergestellte, mit 300 ppm Kaolin mit einem mittleren Durchmesser von 1,5 µm ausgerüstete Polyesterfolie, die auf einer ihrer Oberflächen Strukturen in Form von untereinander verbundenen Elementarzellen mit $d_{max}$ ungefähr 420 µm und $d_{min}$ ungefähr 290 µm und einem maximalen Abstand zwischen tiefsten und höchsten Bereichen dieser Zellen von 1,2 µm aufweist, wobei, wie vergleichende Versuche gezeigt haben, ein Anteil von etwa 0,1 µm durch einzelne, durch das inerte Zusatzmittel verursachte, statistisch über die Folienoberfläche verteilte Erhebungen hervorgerufen wurde, wurde entsprechend Ausführungsbeispiel 1 auf den zu entspiegelnden Formkörper aufgebracht.

Der Glanz dieses Formkörpers betrug nach Auflaminierung dieser Folie in alle Richtungen bei einem 60°-Meßwinkel 167 und bei einem 85°-Meßwinkel 100.

**Patentansprüche**

1. Verfahren zur Herstellung von entspiegelten Oberflächen von Formkörpern, wobei eine wenigstens einschichtige Folie aus einem thermoplastischen Material verwendet wird, die zumindest auf einer ihrer beiden Oberflächen regelmäßige Strukturen aufweist, die sich 0,01 bis 15 µm, vorzugsweise 0,1 bis 5,0 µm über die tiefsten Bereiche der jeweiligen Oberfläche erheben, wobei die Strukturen durch statistisch verteilte, spitzförmige Einzelerhebungen, gegebenenfalls durch in die Folie eingearbeitete Inertpartikel bedingt, überlagert sind, und aus in Längs- und Querrichtung angeordneten, vorzugsweise miteinander verbundenen Elementarzellen weitgehen gleichmäßiger Konfiguration bestehen, deren mittlerer Durchmesser

$$d_m = \frac{d_{max} + d_{min}}{2}$$

mit

$d_{max}$ = maximaler Durchmesser der Elementarzelle an der breitesten Stelle und

$d_{min}$ = minimaler Durchmesser der Elementarzelle an der schmalsten Stelle

im Bereich von 10 bis 800 µm, vorzugsweise im Bereich von 20 bis 400 µm liegt und deren Verhältnis von minimalem zu maximalem Durchmesser im Bereich von

$$0,1 \leq \frac{d_{min}}{d_{max}} \leq 1$$

liegt, wobei die Folie auf den zu entspiegelnden Formkörper aufgebracht wird oder die Oberflächenstrukturen der Folie mit Hilfe einer Dekor- und Adhäsionsschicht spiegelbildlich auf die Oberfläche des zu entspiegelnden Formkörpers übertragen werden.

2. Verfahren nach Anspruch 1, dadurch gekennzeichnet, daß die Folie uni- oder biaxial orientiert und thermofixiert ist.

3. Verfahren nach Anspruch 1 oder 2, dadurch gekennzeichnet, daß die Folie als Deckschicht auf die Oberfläche des Formkörpers, die entspiegelt werden soll, so aufgebracht wird, daß die Seite mit der Strukturierung nach außen liegt.

4. Verfahren nach einem oder mehreren der Ansprüche 1 bis 3, dadurch gekennzeichnet, daß eine wenigstens zweischichtige Folie verwendet wird, deren der strukturierten Folienschicht gegenüberliegende Außenschicht aus einem Polymeren besteht, das gegenüber dem zu entspiegelnden Formkörper eine haftvermittelnde Wirkung besitzt.

5. Verfahren nach einem oder mehreren der Ansprüche 1 oder 2, dadurch gekennzeichnet, daß auf die strukturierte Oberfläche der Folie eine Dekorschicht aufgebracht wird und diese Dekorschicht vollflächig oder partiell auf die zu entspiegelnde Oberfläche des Formkörpers übertragen wird.

6. Verfahren nach Anspruch 1 oder 2, dadurch gekennzeichnet, daß der zu entspiegelnde Formkörper eine Kunststoffplatte ist und die Folie mit der strukturierten Oberfläche als Trennfolie bei der Herstellung dieser Platten verwendet wird, die gegebenenfalls nach dem Herstellungsprozeß der Platten entfernt wird.

7. Verfahren nach einem oder mehreren der Ansprüche 1 bis 6, dadurch gekennzeichnet, daß strukturierte Folien auf Polyesterbasis verwendet werden.

8. Verfahren nach Anspruch 7, dadurch gekennzeichnet, daß strukturierte Folien aus Polyethylenterephthalat, Polybutylenterephthalat, Poly-l,4-cyclohexylen-dimethylenterephthalat, Polyethylen-2,6-naphthalindicarboxylat oder Polyethylen-p-hydroxy-benzoat oder Gemischen derselben verwendet werden.

9. Verfahren nach Anspruch 1, dadurch gekennzeichnet, daß die Inertpartikel einen mittleren Durchmesser im Bereich von 0,001 bis 5 $\mu$m, vorzugsweise von 0,05 bis 2,5 $\mu$m aufweisen und in der strukturierten Folie in einer Menge im Bereich von 0,005 bis 5 Gew.-%, vorzugsweise im Bereich von 0,005 bis 1 Gew.-% vorhanden sind.

## Claims

1. A process for producing antireflection-treated surfaces of molded bodies, which comprises using an at least single-layer film made of a thermoplastic material which has, on at least one of its two surfaces, regular structures which rise 0.01 to 15 $\mu$m, preferably 0.1 to 5.0 $\mu$m, above the lowest regions of the particular surface and are overlaid by randomly distributed, peak-type individual elevations, which are optionally due to inert particles incorporated in the film, the regular structures being composed of preferably mutually linked elementary cells of substantially uniform configuration which are arranged in the longitudinal and transverse direction and whose mean diameter

$$d_m \frac{d_{max} + d_{min}}{2}$$

where

$d_{max} =$ maximum diameter of the elementary cell at the widest point and

$d_{min} =$ minimum diameter of the elementary cell at the narrowest point

is in the range from 10 to 88 $\mu$m, preferably in the range from 20 to 400 $\mu$m, and whose ratio of minimum to maximum diameter is in the region of

$$0.1 \leq \frac{d_{min}}{d_{max}} \leq 1,$$

whereby the film is applied onto the molded body to be antireflection-treated or the surface structures of the film are transferred in mirror-image form to the surface of the molded body to be antireflection-treated by means of a decorative or adhesive layer.

2. The process as claimed in claim 1, wherein the film is uniaxially or biaxially oriented and heat-set.

3. The process as claimed in claim 1 or 2, wherein the film is applied as a covering layer to the surface, to be antireflection-treated, of the molded body in such a way that the side having the structuring is situated on the outside.

4. The process as claimed in one or more of claims 1 to 3, wherein an at least two-layer film is used whose outside layer situated opposite the structured film layer is composed of a polymer which has an adhesion-promoting action with respect to the molded body to be antireflection-treated.

5. The process as claimed in one or more of claim 1 or 2, wherein a decorative layer is applied to the structured surface of the film and said decorative layer is transferred over the whole surface or partially to the surface, to be antireflection-treated, of the molded body.

6. The process as claimed in claim 1 or 2, wherein the molded body to be antireflection-treated is a plastic panel and the film having the structured surface is used as a release film in the production of said panels, which release film is optionally removed after the production process of the panels.

7. The process as claimed in one or more of claims 1 to 6, wherein polyester-based structured films are used.

8. The process as claimed in claim 7, wherein structured films composed of polyethylene terephthalate, polybutylene terephthalate, poly-1,4-cyclohexylene dimethylene terephthalate, polyethylene-2,6-naphthaline dicarboxylate or polyethylene p-hydroxybenzoate or mixtures of the same are used.

**9.** The process as claimed in claim 1, wherein the inert particles have a mean diameter in the range from 0.001 to 5 $\mu$m, preferably from 0.05 to 2.5 $\mu$m and are present in the structured film in an amount in the range from 0.005 to 5 % by weight, preferably in the range from 0.005 to 1 % by weight.

**Revendications**

**1.** Procédé de réalisation de surfaces anti-réfléchissantes de corps moulés utilisant une feuille au moins monocouche d'un matériau thermoplastique qui présente au moins sur l'une de ses deux faces des structures régulières qui s'élèvent au-dessus des zones les plus profondes de la surface considérée, de 0,01 jusqu'à 15 $\mu$m, de préférence de 0,1 jusqu'à 5,0 $\mu$m, les structures étant superposées et se présentant sous la forme de bosses isolées pointues et réparties statistiquement, résultant éventuellement de l'insertion de particules inertes dans la feuille, et étant constituées de cellules élémentaires disposées dans les directions longitudinale et transversale de préférence reliées entre elles, de configuration essentiellement uniforme, dont le diamètre moyen

$$d_m = \frac{d_{max} + d_{min}}{2}$$

avec

$d_{max} = $ diamètre maximum des cellules élémentaires à l'emplacement le plus large et
$d_{min} = $ diamètre minimum des cellules élémentaires à l'emplacement le moins large

est situé dans la gamme de 10 à 800 $\mu$m, de préférence dans la gamme de 20 à 400 $\mu$m et dont le rapport du diamètre minimum au diamètre maximum est situé dans la gamme

$$0,1 \le \frac{d_{min}}{d_{max}} \le 1,$$

la feuille étant placée sur le corps moulé à rendre anti-réfléchissant ou les structures de surface de la feuille étant transférées au moyen d'une couche décorative ou d'une couche d'adhérence reproduisant la surface structurée sur la surface du corps moulé à rendre anti-réfléchissant.

**2.** Procédé selon la revendication 1, caractérisé en ce que la feuille est orientée uniaxialement ou biaxialement et est thermofixée.

**3.** Procédé selon la revendication 1 ou 2, caractérisé en ce que l'on applique la feuille comme couche de revêtement sur les surfaces du corps moulé qui doit être rendu anti-réfléchissant, de manière à ce que la face présentant les structures soit située vers l'extérieur.

**4.** Procédé selon une ou plusieurs des revendications 1 à 3, caractérisé en ce que l'on utilise une feuille d'au moins deux couches, dont la couche externe opposée à la couche présentant les structures est constituée d'un polymère adhérant au corps moulé à rendre anti-réfléchissant.

**5.** Procédé selon une ou plusieurs des revendications 1 ou 2, caractérisé en ce que l'on dépose sur les surfaces de la feuille présentant les structures une couche décorative et en ce que l'on transfère cette couche décorative sur tout ou partie de la surface à rendre anti-réfléchissante du corps moulé.

**6.** Procédé selon la revendication 1 ou 2, caractérisé en ce que le corps moulé à rendre anti-réfléchissant est une plaque de matières plastiques et en ce que l'on utilise la feuille à surface structurée comme feuille de séparation lors de la fabrication de ces plaques, que l'on retire éventuellement après fabrication des plaques.

**7.** Procédé selon une ou plusieurs des revendications 1 à 6, caractérisé en ce que l'on utilise des feuilles structurées à base de polyester.

**8.** Procédé selon la revendication 7, caractérisé en ce que l'on utilise des feuilles structurées en polytéréphtalate d'éthylène, en polytéréphtalate de butylène, en polydiméthylène-téréphtalate de 1,4-cyclohexylène, en poly-2,6-napthalènedicarboxylate d'éthylène ou en poly-p-hydroxybenzoate d'éthylène ou en mélanges de ceux-ci.

**9.** Procédé selon la revendication 1, caractérisé en ce que les particules inertes présentent un diamètre moyen dans la gamme de 0,001 à 5 $\mu$m, de préférence dans la gamme de 0,05 à 2,5 $\mu$m, et en ce qu'elles sont présentes dans la feuille structurée à raison de 0,005 à 5% en poids, de préférence à raison de 0,005 à 1% en poids.